(19) Europäisches Patentamt
European Patent Office
Office européen des brevets

(11) EP 2 643 358 B1

(12) # FASCICULE DE BREVET EUROPEEN

(45) Date de publication et mention de la délivrance du brevet:
**26.07.2017 Bulletin 2017/30**

(21) Numéro de dépôt: **11788125.0**

(22) Date de dépôt: **23.11.2011**

(51) Int Cl.:
***C08C 19/26*** *(2006.01)* ***C08C 19/42*** *(2006.01)*
***C08C 19/44*** *(2006.01)* ***C08F 297/02*** *(2006.01)*
***C08L 53/00*** *(2006.01)*

(86) Numéro de dépôt international:
**PCT/EP2011/070744**

(87) Numéro de publication internationale:
**WO 2012/069508 (31.05.2012 Gazette 2012/22)**

(54) **ELASTOMÈRE DIÉNIQUE À BLOC POUR DES COMPOSITIONS DE CAOUTCHOUC UTILISABLES POUR DES PNEUMATIQUES**

BLOCKDIENELASTOMER FÜR KAUTSCHUKZUSAMMENSETZUNGEN ZUR VERWENDUNG FÜR LUFTREIFEN

BLOCK DIENE ELASTOMER FOR RUBBER COMPOSITIONS THAT CAN BE USED IN PNEUMATIC TIRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2010 FR 1059643**

(43) Date de publication de la demande:
**02.10.2013 Bulletin 2013/40**

(73) Titulaire: **Compagnie Générale des Etablissements Michelin**
**63000 Clermont-Ferrand (FR)**

(72) Inventeurs:
- **FAVROT, Jean-Michel**
**F-63040 Clermont-Ferrand Cedex 09 (FR)**
- **SIMON, Nathalie**
**F-63040 Clermont-Ferrand Cedex 09 (FR)**
- **MARECHAL, Jean Marc**
**F-63040 Clermont-Ferrand Cedex 09 (FR)**

(74) Mandataire: **Le Cam, Véronique Marie Christine**
**M.F.P. Michelin,**
**SGD/LG/PI,**
**F35,**
**Ladoux**
**63040 Clermont-Ferrand-Cedex 9 (FR)**

(56) Documents cités:
**EP-A1- 1 278 789** **WO-A2-03/037946**
**FR-A1- 2 930 554**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 643 358 B1

## Description

La présente invention se rapporte à un élastomère diénique à bloc spécifique dont la ou les extrémités sont constituées d'un bloc polybutadiène, destiné à former une matrice élastomère d'une composition de caoutchouc réticulable d'hystérèse réduite, une composition de caoutchouc le contenant, un article semi-fini la comprenant, ainsi qu'un pneumatique incorporant un tel article semi-fini.

La réduction de l'hystérèse des mélanges est un objectif permanent de l'industrie du pneumatique afin de limiter la consommation d'essence et de préserver ainsi l'environnement. Cette réduction d'hystérèse doit toutefois se faire en conservant intacte, voire en améliorant l'aptitude à la mise en oeuvre des mélanges.

Pour atteindre l'objectif de baisse d'hystérèse, de nombreuses solutions ont déjà été expérimentées. En particulier, la fonctionnalisation des polymères par une fonction interactive avec la charge renforçante est apparue comme une voie intéressante.

Des fonctions interactives avec la charge ont ainsi été adjointes en extrémité de chaîne en début ou fin de polymérisation au moyen d'amorceurs fonctionnels ou d'agents de fonctionnalisation. A titre d'exemple, la 4,4'-bis-(diéthylaminobenzophénone), encore appelée DEAB, ou d'autres fonctions aminées qui interagissent avec le noir de carbone ont été adjointes en fin de polymérisation comme décrit dans les documents de brevet FR2526030 et US4848511. Les polymères couplés ou étoilés à l'étain contiennent des fonctions susceptibles d'interagir avec le noir de carbone introduites en fin de polymérisation. A titre d'exemple, on peut citer le document de brevet européen EP0709235. Des fonctions interagissant avec la silice ont également été adjointes en extrémité de chaîne en fin de polymérisation, telles que des fonctions contenant un groupe silanol divulguées dans le document de brevet FR2740778 ou des fonctions contenant des groupes alkoxysilane ou aryloxysilane décrits dans le document US5066721. La plupart de ces solutions, tant pour le noir que pour la silice, conduit réellement à une limitation d'hystérèse des compositions correspondantes mais concomitamment à une plus grande difficulté de mise en oeuvre de ces mêmes compositions.

Des fonctions interactives avec la charge ont également été adjointes en milieu de chaîne en fin de polymérisation. On peut citer à titre d'exemple le document de brevet FR2930554 divulguant des fonctions amino-alkoxysilane situées en milieu de chaîne. Cette solution conduit à des propriétés hystérétiques et mécaniques améliorées des compositions à l'état vulcanisé ainsi qu'une mise en oeuvre à cru améliorée de ces mêmes compositions.

Le brevet EP1278789 décrit un copolymère à n blocs (n = 2 ou 3) destiné à former une matrice élastomère d'une composition de caoutchouc réticulable, chacun desdits blocs comprenant un élastomère diénique essentiellement insaturé, et l'un ou chacun desdits blocs formant extrémité de chaîne dudit copolymère étant constitué d'un polyisoprène. La masse moléculaire moyenne en nombre du bloc polyisoprène est comprise entre 2 500 et 20 000 g/mol, et la masse moléculaire moyenne en nombre du bloc du copolymère qui est autre que ledit bloc polyisoprène est sensiblement comprise entre 80 000 g/mol et 350 000 g/mol. L'utilisation dudit copolymère à blocs permet d'optimiser d'une manière significative les résultats de réduction d'hystérèse et d'aptitude à la mise en oeuvre pour ladite composition de caoutchouc le contenant.

La demanderesse a découvert de façon surprenante qu'un élastomère diénique à bloc répondant à la formule suivante :

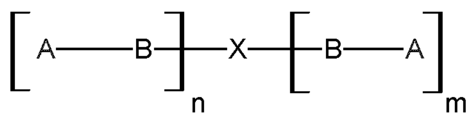

Où :

- n et m sont chacun un entier supérieur ou égal à 0, tels que n+m≥ 1 et n+m≤ 20,
- chaque bloc A est constitué d'un polybutadiène,
- chaque bloc B est constitué d'un élastomère diénique dont le taux molaire d'unités issues de diènes conjugués est supérieur à 15%, les blocs B étant identiques entre eux,
- X est un groupe organique ou inorganique pouvant contenir une fonction interactive avec une charge renforçante,
- la masse moléculaire moyenne en nombre Mn1 de chaque bloc A varie de 2 500 à 20 000 g/mol,
- la masse moléculaire moyenne en nombre Mn2 de chaque bloc B varie de 80 000 à 350 000 g/mol, et
- le taux d'enchaînements 1,2 dans chaque bloc A est compris entre 1 et 20%,

permet une réduction de l'hystérèse d'une composition de caoutchouc le contenant, tout en conservant une mise en oeuvre acceptable pour une utilisation en pneumatique.

L'invention a donc pour objet un élastomère diénique à bloc répondant à la formule suivante :

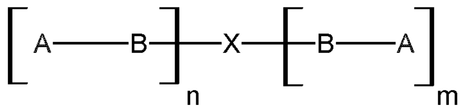

Où :

- n et m sont chacun un entier supérieur ou égal à 0, tels que n+m≥ 1 et n+m≤ 20,
- chaque bloc A est constitué d'un polybutadiène,
- chaque bloc B est constitué d'un élastomère diénique dont le taux molaire d'unités issues de diènes conjugués est supérieur à 15%, les blocs B étant identiques entre eux,
- X est un groupe organique ou inorganique, pouvant contenir une fonction interactive avec une charge renforçante,
- la masse moléculaire moyenne en nombre Mn1 de chaque bloc A varie de 2 500 à 20 000 g/mol,
- la masse moléculaire moyenne en nombre Mn2 de chaque bloc B varie de 80 000 à 350 000 g/mol, et
- le taux d'enchaînements 1,2 dans le bloc A est compris entre 1 et 20%.

Préférentiellement, le rapport des masses moléculaires Mn1/Mn2 est compris entre 5 et 20%.

De préférence, m+n varie de 1 à 4. Autrement dit, l'élastomère diénique à bloc selon l'invention comprend de préférence de 1 à 4 chaînes ou branches élastomères A-B (m, n et A-B étant définis tels que précédemment).

A titre d'élastomère diénique « essentiellement insaturé » (i.e dont le taux molaire d'unités issues de diènes conjugués est supérieur à 15%) susceptible d'être mis en oeuvre pour obtenir le ou les blocs B autre que le ou les blocs polybutadiène, eux-mêmes répondant à cette définition, on entend tout homopolymère obtenu par polymérisation d'un monomère diène conjugué ayant de 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

A titre préférentiel, le ou les blocs B sont choisis parmi les copolymères du styrène et du butadiène, les copolymères du styrène et de l'isoprène, les copolymères du butadiène et de l'isoprène, les terpolymères de styrène/butadiène/isoprène et le polyisoprène.

Conviennent les polyisoprènes, les copolymères de butadiène-styrène et en particulier ceux ayant une Tg (température de transition vitreuse Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 55°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans - 1,4 de la partie isoprénique comprise entre 10% et 50%, et plus généralement tout copolymère butadiène-styrène-isoprène ayant une Tg comprise entre - 5°C et - 70°C.

Selon un premier mode de réalisation de l'invention, le ou les blocs B sont des copolymères du styrène et du butadiène.

Selon un second mode de réalisation de l'invention, le ou les blocs B sont des copolymères du styrène et de l'isoprène.

De préférence, le groupe X comprend une fonction interactive avec une charge renforçante.

De préférence, la fonction interactive avec la charge renforçante comprend un groupe choisi parmi les groupes silanol, mono, di ou tri-alkoxysilane ou alkoxysilane portant une fonction amine primaire, secondaire ou tertiaire. De façon alternative, la fonction interactive avec la charge renforçante comprend une liaison C-Sn.

La fonction interactive comprenant une liaison C-Sn peut être obtenue avec un agent de fonctionnalisation mono-halogénoétain ou de couplage di-halogénoétain pouvant répondre à la formule générale $R_{4-x}SnX^0_x$, où x représente un entier de valeur 1 ou 2, R représente un radical alkyle, cycloalkyle, aryle, alkaryle ou vinyle ayant de 1 à 12 atomes de carbone, de préférence un butyle, et $X^0$ est un atome d'halogène, de préférence le chlore. A titre d'agent de fonctionnalisation préféré, on peut citer le monochlorure de tributyl étain ou le dichlorure de dibutyl étain. De la même manière, la fonctionnalisation peut être obtenue avec un agent de fonctionnalisation dérivé de l'étain pouvant répondre à la formule générale $(X^1_yR^1_{3-y}Sn)$-O-$(SnR^1_{3-z}X^1_z)$ ou $(X^1_y\ R^1_{3-y}Sn)$-O-$(CH2)_e$-O-$(SnR^1_{3-z}X^1_z)$, où y et z représentent des entiers variant de 0 à 2 et y+z égal à 1 ou 2 , $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et e représente un entier de 1 à 20, de préférence 4.

Cette fonction interactive peut encore être obtenue avec un agent d'étoilage tri ou tétra-halogénoétain pouvant répondre à la formule $R^2_qS_nX^2_{4-q}$, où q représente un entier de valeur 0 ou 1, $R^2$ représente un radical alkyle, cycloalkyle, aryle, alkaryle ou vinyle ayant de 1 à 12 atomes de carbone, de préférence un butyle, et $X^2$ est un atome d'halogène, de préférence le chlore. A titre d'agent d'étoilage préféré, on peut citer le trichlorure de butyl étain ou le tétrachlorure d'étain. De la même manière, l'étoilage peut être obtenu avec un agent de fonctionnalisation dérivé de l'étain pouvant répondre à la formule générale $(X^3_kR^3_{3-k}Sn)$-O-$(SnR^3_{3-1}X^3_1)$ ou $(X^3_kR^3_{3-k}Sn)$-O-$(CH2)_f$-O-$(SnR^3_{3-1}X^3_1)$, où k et 1 représentent des entiers variant de 0 à 3, k+1 variant de 3 à 6, $R^3$ représente un radical alkyle, cycloalkyle, aryle, alkaryle ou vinyle ayant de 1 à 12 atomes de carbone, de préférence un butyle, $X^3$ est un atome d'halogène, de préférence le chlore et f représente un entier de valeur de 1 à 20 de préférence 4.

Ladite fonction interactive peut également comprendre un groupe amine, qui peut être obtenue par exemple avec un agent de fonctionnalisation tel que la 4,4'-bis-(diéthylaminobenzophénone), encore appelée DEAB.

Ainsi, un élastomère diénique à bloc préféré selon l'invention est tel que le ou les blocs B sont des copolymères du styrène et du butadiène et X est un groupe organique ou inorganique contenant une fonction interactive avec la silice ou le noir de carbone, et n+m varie de 1 à 4.

De façon encore plus préférée, le ou les blocs B sont des copolymères du styrène et du butadiène et X est interactive avec du noir de carbone et elle peut par exemple comprendre une liaison C-Sn, la fonctionnalisation Sn pouvant être obtenue avec un agent de fonctionnalisation, de couplage ou d'étoilage tel que défini précédemment, et n+m varie de 1 à 4.

L'élastomère selon l'invention est généralement synthétisé par polymérisation anionique amorcée par un initiateur. En tant qu'initiateur de polymérisation, on peut utiliser tout initiateur anionique monofonctionnel connu. On peut citer en particulier les initiateurs organolithiens, notamment ceux comportant une liaison carbone-lithium. Des composés représentatifs sont les organolithiens aliphatiques tels que l'éthyllithium, le n-butyllithium (n-BuLi), l'isobutyllithium et les polyméthylènes dilithium tels que le 1,4-dilithiobutane.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

Lorsque l'élastomère diénique à bloc selon l'invention comprend une fonction interactive avec une charge renforçante, l'élastomère fonctionnalisé peut être obtenu de manière connue en soi par réaction d'un agent de fonctionnalisation ou de couplage ou d'étoilage sur l'élastomère diénique vivant issu de la polymérisation.

L'invention a encore pour objet une composition de caoutchouc réticulable ou réticulée comprenant une matrice élastomère, la matrice élastomère comprenant un élastomère diénique à bloc selon l'invention.

La composition peut comprendre de 1 à 100 pce d'élastomère diénique à bloc selon l'invention.

La composition selon l'invention peut également comprendre au moins un élastomère diénique différent dudit élastomère bloc selon l'invention. Ce ou ces élastomères diéniques différents de l'élastomère bloc selon l'invention peuvent être choisis parmi les élastomères diéniques conventionnellement utilisés dans les pneus, tel que le caoutchouc naturel ou un élastomère synthétique, ou encore un autre élastomère fonctionnalisé ou étoilé.

La composition selon l'invention peut comprendre une charge renforçante.

On peut utiliser tout type de charge renforçante connue pour ses capacités à renforcer une composition de caoutchouc utilisable pour la fabrication de pneumatiques, par exemple une charge organique renforçante tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple

les noirs N115, N134, N234, N326, N330, N339, N347, N375.

On peut aussi utiliser, selon les applications visées, des noirs de séries plus élevées FF, FEF, GPF, SRF, par exemple les noirs N660, N683, N772. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque la composition selon l'invention est destinée à des bandes de roulement de pneumatique à faible résistance au roulement, la charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De préférence, le taux de charge renforçante dans la composition est compris entre 30 et 150 pce, plus préférentiellement entre 50 et 120 pce. L'optimum est différent selon les applications particulières visées le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation, la charge renforçante comprend majoritairement de la silice, de préférence le taux de noir de carbone présent dans la composition étant compris entre 2 et 20 pce.

Selon un autre mode de réalisation de l'invention, le charge renforçante comprend majoritairement du noir de carbone.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $$Z - A - S_x - A - Z,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

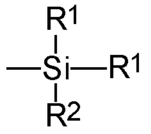 ; 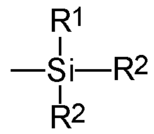 ; 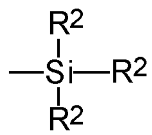 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534, WO2009/062733.

Dans la composition de caoutchouc, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition selon l'invention peut également comprendre un agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition selon l'invention comporte, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de de réticulation chimique.

Selon un mode de réalisation préférentiel de l'invention, tous les constituants de base de la composition selon l'invention, à l'exception de l'agent de réticulation chimique, à savoir notamment la ou les charges renforçantes, l'agent de couplage le cas échéant, sont incorporés de manière intime, par malaxage, à l'élastomère diénique à bloc selon l'invention, et aux autres élastomères diéniques le cas échéant, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors l'agent de réticulation chimique à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

L'invention a encore pour objet un article semi-fini en caoutchouc pour pneumatique, comprenant la composition de caoutchouc, réticulée ou réticulable, selon l'invention. De préférence, ledit article est une bande de roulement.

L'invention a enfin pour objet un pneumatique comportant un article semi-fini selon l'invention.

L'invention est illustrée par les exemples qui suivent.

Exemples

1 - Préparation d'une matrice élastomère selon l'invention

1.1- Mesures et tests utilisés - Techniques expérimentales utilisées pour la caractérisation avant cuisson des polymères obtenus :

(a) Détermination de la distribution de masses molaires par la technique de chromatographie d'exclusion stérique (SEC conventionnelle)

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) et la (Mp) masse au pic peuvent être déterminées et l'indice de polymolécularité (Ip = Mw/Mn) calculé via un étalonnage dit de MOORE.

(1) Préparation du polymère:

Il n'y a pas de traitement particulier de l'échantillon de polymère avant analyse. Celui-ci est simplement solubilisé dans du tétrahydrofuranne à une concentration d'environ 1 g/l. Puis la solution est filtrée sur filtre de porosité 0,45μm avant injection.

(2) Analyse SEC :

L'appareillage utilisé est un chromatographe « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 μl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée avec des étalons de Polystyrène de masses molaires connues.

(b) Pour les polymères et les compositions de caoutchouc, les viscosités Mooney ML (1+4) à 100 °C sont mesurées selon la norme ASTM D-1646.
Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en « unité Mooney » (UM, avec 1 UM = 0,83 N.m).

(c) Les températures de transition vitreuse Tg des polymères sont mesurées selon la norme ASTM D3418-03 au moyen d'un calorimètre différentiel (« differential scanning calorimeter »).

(d) La spectroscopie proche infrarouge (NIR) est utilisée pour déterminer quantitativement le taux massique de styrène dans l'élastomère ainsi que sa microstructure (répartition relative des unités butadiène 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

(e) Pour les polymères, la viscosité inhérente à 25 °C d'une solution de polymère à 0,1 g/dl dans le toluène, est mesurée à partir d'une solution de polymère sec :

La viscosité inhérente est déterminée par la mesure du temps d'écoulement t de la solution de polymère et du temps d'écoulement to du toluène, dans un tube capillaire.

Dans un tube Ubbelhode (diamètre du capillaire 0,46 mm, capacité 18 à 22 ml), placé dans un bain thermostaté à 25 ± 0,1 °C, le temps d'écoulement du toluène et celui de la solution polymère à 0,1 g/dl sont mesurés.
La viscosité inhérente est obtenue par la relation suivante :

$$\eta_{inh} = \frac{1}{C} \ln\left[\frac{(t)}{(t_o)}\right]$$

avec :

C : concentration de la solution toluénique de polymère en g/dl ;
t : temps d'écoulement de la solution toluénique de polymère en secondes ;
$t_o$ : temps d'écoulement du toluène en secondes ;
$\eta_{inh}$ : viscosité inhérente exprimée en dl/g.

1.2- Préparation d'un élastomère A : copolymère fonctionnalisé témoin (noté SBR A)

(a) Copolymérisation du butadiène et du styrène :

Le copolymère témoin en discontinu dans un réacteur de 75 L de volume réactionnel, sous pression d'azote, qui est muni d'un agitateur de type turbine. On introduit dans ce réacteur du cyclohexane, du butadiène et du styrène, selon des proportions massiques respectifs de 100/10/6,6. On ajoute également dans ce réacteur 500 parties par million (en poids) de tétrahydrofurane, (THF) à titre d'agent promoteur de liaisons vinyliques.
On introduit dans le réacteur une quantité de 45 μmol de n-butyllithium actif (n-BuLi) par 100 g de solution afin de neutraliser les impuretés protiques qui sont apportées par les différents constituants présents dans le réacteur.
On introduit 650 μmol de n-BuLi représentant la quantité d'initiateur actif pour initier la polymérisation.
La température du réacteur est maintenue à 50 °C et après un temps de polymérisation de 60 min la conversion en monomères est de 74 %.
Dans le même réacteur, on ajoute ensuite 312 μmol/100 g de monomères d'un agent de fonctionnalisation constitué de dibutyldichloroétain. La réaction de fonctionnalisation est effectuée à 50 °C. Après 15 min. de cette réaction de couplage, on soumet le copolymère ainsi fonctionnalisé à un traitement anti-oxydant, à l'aide de 0,8 pce de 2, 2'-méthylène-bis (4-méthyl-6-tertiobutylphénol) et de 0,2 pce de N-(1, 3-diméthylbutyl)-N'-phényl-p- phénylènediamine. On stoppe toute réaction par l'ajout 1,5 équivalent lithium de méthanol.
On sépare le copolymère ainsi traité de sa solution par une opération de stripping à la vapeur d'eau, puis on le sèche le sèche sur une machine à vise à 150 °C pendant 15 sec, pour obtenir le copolymère fonctionnalisé A témoin.
La viscosité inhérente de ce copolymère A est de 1,94 dl/g, et sa viscosité ML est de 83.
Ce copolymère A contient 28 % de styrène (en masse) et, pour sa partie butadiénique, 2,8% de motifs vinyliques et la température de transition vitreuse Tg de ce copolymère A est de -47,7°C.
La masse moléculaire en nombre et l'indice de polydispersité de ce copolymère A, lesquels sont déterminés par SEC conventionnelle, sont de 183732 g/mol et 1,18 respectivement.

1.3- Préparation d'un élastomère B (noté SBR B) : copolymère fonctionnalisé à trois blocs selon l'invention

(a) Préparation d'un polybutadiène vivant :

Le polybutadiène vivant est préparé en discontinu dans une bouteille de 750 ml de capacité. On introduit dans cette bouteille, d'une part, 320 ml de méthylcyclohexane et 80 ml de butadiène selon les rapports massiques respectifs de 100/20 et, d'autre part, une quantité de 10 000 μmol de sec-butyllithium actif (s-BuLi) pour 100 g de butadiène.
La polymérisation est réalisée à 70 °C et après un temps réaction de 12 min, la conversion en butadiène est de 100 %. Ce polybutadiène vivant ainsi obtenu est stocké au congélateur pour être utilisé dans un deuxième moment.
Une deuxième bouteille est préparée avec le même mode opératoire en parallèle et est stoppée par un équivalent

lithium de méthanol afin de réaliser les caractérisations du polybutadiène ainsi obtenu. La masse moléculaire en nombre, laquelle est déterminée par SEC conventionnelle est de 109437g/mol. Le taux d'enchaînements 1,2 est de 10 %.

(b) Copolymérisation du butadiène et du styrène initiée par ce polybutadiène vivant :

Le copolymère bloc autre que le dit polybutadiène vivant est préparé en discontinu dans un réacteur de 10 1 de capacité, sous pression d'azote qui est muni d'un agitateur de type turbine. On introduit dans ce réacteur 6200 mL de méthylcyclohexane, 689 mL de butadiène et 387 mL de styrène, selon des proportions massiques respectives de 100/9,2/7,3. On ajoute également dans ce réacteur 550 parties par million (en poids) de tétrahydrofurane, (THF) à titre d'agent promoteur de liaisons vinyliques.

On introduit dans le réacteur une quantité de 1500 μmol de n-butyllithium actif (n-BuLi) afin de neutraliser les impuretés protiques qui sont apportées par les différents constituants présents dans le réacteur avec le but de limiter la formation polybutadiène mort ou désactivé, lors de l'introduction de la solution de polybutadiène vivant dans le réacteur.

On introduit la totalité du polybutadiène vivant préparé dans l'étape précédente décrite au paragraphe (a) du chapitre 1-2) représentant la quantité d'initiateur actif pour initier la polymérisation.

La température du réacteur est maintenue à 50 °C et après un temps de polymérisation de 55 min la conversion en monomères est de 70 %.

La viscosité inhérente du copolymère avant fonctionnalisation mesurée sur un prélèvement stoppé par un équivalent lithium de méthanol est de 1,35% dl/g et la masse moléculaire en nombre et l'indice de polydispersité du même prélèvement, lesquels sont déterminés par SEC conventionnelle, sont de 109437 g/mol et 1,15 respectivement.

Dans le même réacteur, on ajoute ensuite 2496 μmol/100 g de monomères d'un agent de fonctionnalisation constitué de dibutyldichloroétain. La réaction de fonctionnalisation est effectuée à 60 °C. Après 30 min. de cette réaction de couplage, on soumet le copolymère block ainsi fonctionnalisé à un traitement anti-oxydant, à l'aide de 0,8 pce de 2,2'-méthylène-bis (4-méthyl-6-tertiobutylphénol) et de 0,2 pce de N-(1,3-diméthylbutyl)-N'-phényl-p-phénylènediamine. On stoppe toute réaction par l'ajout 1,5 équivalents lithium de méthanol.

On sépare le copolymère ainsi traité de sa solution par une opération de stripping à la vapeur d'eau, puis on l'essore sur un outil à cylindres à 100 °C pendant environ 5 min et on sèche à 60°C à l'étuve sous vide et sous courant d'azote pendant environ 4 heures, pour obtenir le copolymère fonctionnalisé B à blocs selon l'invention.

La viscosité inhérente de ce copolymère B est de 2,09 dl/g, et sa viscosité ML est de 87.

Le bloc SBR de ce copolymère B contient 28,6 % de styrène (en masse) et, pour sa partie butadiénique, 22,1 % de motifs vinyliques et la température de transition vitreuse Tg de ce copolymère B est de - 49°C.

La masse moléculaire en nombre et l'indice de polydispersité de ce copolymère B, lesquels sont déterminés par SEC conventionnelle, sont de 175489 g/mol et 1,28 respectivement.

2- Exemples comparatifs de compositions de caoutchouc

2.1- Mesures et tests utilisés

a) La viscosité Mooney ML (grand plateau) ou MS (petit plateau) (1+4) à 100° C mesurée selon la norme ASTM: D-1646, intitulée " Mooney " dans les tableaux.

(b) La dureté SHORE A: mesures effectuées selon la norme DIN 53505.

(c) Les essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation à 60°C ± 2°C les modules sécants nominaux (ou contraintes apparentes, en MPa) à 10%, 100% et 300% d'allongement notés respectivement MSA10, MSA100 et MSA300. Les contraintes à la rupture (FR) en MPa et les allongements à la rupture (ER) en % sont mesurés à 60°C ± 2°C, selon la norme NF T 46-002.

(d) Les propriétés dynamiques ΔG* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la norme ASTM D 1349-99, ou selon les cas à une température différente (60°C). On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan δ. Pour le cycle retour, on indique la valeur

maximale de tan δ observée (tan(δ)max), ainsi que l'écart de module complexe (ΔG*) entre les valeurs à 0,1 et 50% de déformation (effet Payne).

2.2- Exemple

Dans cet exemple, les deux élastomères SBR A et SBR B ont été utilisés pour la préparation de compositions de caoutchouc A et B, comprenant chacune du noir de carbone à titre de charge renforçante.
Chacune de ces compositions A et B présente la formulation suivante (exprimée en pce : parties pour cent parties d'élastomère) :

| | |
|---|---|
| Elastomère | 100 |
| N234 | 54 |
| Paraffine | 1 |
| Anti-oxydant (1) | 4 |
| Acide stéarique | 1,5 |
| ZnO | 3 |
| Soufre | 1,3 |
| Accélérateur (2) | 1,3 |

(1) N-1,3 diméthylbutyl N-phénylparaphénylènediamine (6-PPD)

(2) N-cyclohexyl-2-benzothiazylsulfénamide (CBS)

Chacune des compositions suivantes est réalisée, dans un premier temps, par un travail thermo-mécanique, puis, dans un second temps de finition, par un travail mécanique.
On introduit successivement, dans un mélangeur interne de laboratoire de type "Banbury', dont la capacité est de 400 $cm^3$, qui est rempli à 75% et dont la température initiale est d'environ 70°C, l'élastomère, le noir, la paraffine, l'antioxydant, l'acide stéarique et le monoxyde de zinc. On conduit l'étape de travail thermo-mécanique pendant 5 à 6 minutes, jusqu'à une température maximale de tombée de 160°C environ. Le premier temps précité de travail thermo-mécanique est ainsi réalisé, étant précisé que la vitesse moyenne des palettes lors de ce premier temps est de 70 tours/min.
On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).
Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques. La vulcanisation est conduite pendant 15 minutes à 150°C.
On compare entre elles les propriétés de ces deux compositions tant à l'état non vulcanisé que vulcanisé. Les résultats sont consignés dans le tableau suivant :

| Composition | A | B |
|---|---|---|
| Elastomère | SBRA | SBRB |
| ML(1+4)100°C (élastomère) | 83 | 87 |
| Propriétés à l'état non vulcanisé : | | |
| MS(1+4) 100°C (mélange) | 55 | 58 |
| Propriétés à l'état vulcanisé : | | |
| Shore A | 66 | 66 |
| MSA10 | 6,73 | 6,47 |
| MSA100 | 2,75 | 2,70 |
| MSA300 | 5,32 | 5,41 |
| MSA300/MSA100 | 1,93 | 2,00 |

(suite)

| Composition | A | B |
|---|---|---|
| Elastomère | SBRA | SBRB |
| Pertes 60°C (%) | 26 | 23 |
| Traction : | | |
| FR (MPa) | 20 | 19 |
| AR (%) | 386 | 362 |
| Propriétés dynamiques en fonction de la déformation : | | |
| $\Delta G^*$ (MPa) à 60°C | 1,45 | 1,27 |
| $Tan\delta_{max}$ à 60°C | 0,170 | 0,155 |

On notera que la composition B selon l'invention, à base dudit copolymère à bloc fonctionnalisé, présente une valeur de Mooney "mélange" proche de celle de la composition témoin A à base du SBR fonctionnalisé A. Les compositions B selon l'invention et témoin A présentent donc une aptitude à la mise en oeuvre à l'état non vulcanisé équivalente.

Concernant les propriétés à l'état vulcanisé, les compositions B selon l'invention et témoin A présentent des propriétés équivalentes exceptées les pertes à 60°C et les propriétés dynamiques. La composition B selon l'invention présente en effet des valeurs de pertes à 60°C, de $\Delta G^*$ et de $Tan\delta_{max}$ à 60°C inférieures à celles de la composition témoin A. Les propriétés hystérétiques de la composition B selon l'invention sont donc améliorées par rapport à celles de la composition témoin A.

En d'autres termes, la composition B selon l'invention, à base dudit copolymère à bloc fonctionnalisé B, présente des propriétés de caoutchouterie à l'état non réticulé et à l'état réticulé qui sont améliorées par rapport à celles de la composition A à base du SBR fonctionnalisé A du fait d'une hystérèse nettement réduite à mise en oeuvre équivalente.

## Revendications

1. Elastomère diénique à bloc répondant à la formule suivante :

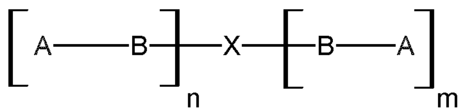

Où :

- n et m sont chacun un entier supérieur ou égal à 0, tel que n+m≥ 1 et n+m≤20,
- chaque bloc A est constitué d'un polybutadiène,
- chaque bloc B est constitué d'un élastomère diénique dont le taux molaire d'unités issues de diènes conjugués est supérieur à 15%, les blocs B étant identiques entre eux,
- X est un groupe organique ou inorganique, pouvant contenir une fonction interactive avec une charge renforçante,
- la masse moléculaire moyenne en nombre Mn1 de chaque bloc A varie de 2 500 à 20 000 g/mol,
- la masse moléculaire moyenne en nombre Mn2 de chaque bloc B varie de 80 000 à 350 000 g/mol, et
- le taux d'enchaînements 1,2 dans chaque bloc A est compris entre 1 et 20%.

2. Elastomère diénique à bloc selon la revendication 1, **caractérisé en ce que** le rapport desdites masses moléculaires Mn1/Mn2 est compris entre 5 et 20%.

3. Elastomère diénique à bloc selon la revendication 1 ou 2 **caractérisé en ce que** m+n varie de 1 à 4.

4. Elastomère diénique à bloc selon l'une quelconque des revendications 1 à 3, **caractérisé en ce que** le bloc X comprend une fonction interactive avec une charge renforçante.

5. Elastomère diénique à bloc selon la revendication 4, **caractérisé en ce que** ladite fonction interactive avec la charge renforçante comprend un groupe choisi parmi les groupes silanol, amine, mono-, di- ou tri-alkoxysilane, alkoxysilane

portant une fonction amine primaire, secondaire ou tertiaire.

6. Elastomère diénique à bloc selon la revendication 4, **caractérisé en ce que** ladite fonction interactive avec la charge renforçante comprend une liaison C-Sn.

7. Elastomère diénique à bloc selon la revendication 6, **caractérisé en ce que** ladite fonction interactive avec la charge renforçante est obtenue par réaction avec un agent de type mono, di, tri ou tétra-halogénoétain.

8. Elastomère diénique à bloc selon l'une quelconque des revendications précédentes, **caractérisé en ce que** le ou les blocs B sont choisis parmi le polyisoprène, les copolymères du styrène et du butadiène, les copolymères du styrène et de l'isoprène, les copolymères du butadiène et de l'isoprène ou les terpolymères de styrène/butadiène/isoprène.

9. Composition de caoutchouc réticulable ou réticulée comprenant une matrice élastomère, **caractérisée en ce que** la matrice élastomère comprend un élastomère diénique à bloc tel que défini dans l'une quelconque des revendications précédentes.

10. Composition selon la revendication 9, **caractérisée en ce qu'**elle comprend une charge renforçante.

11. Composition selon la revendication 9 ou 10 **caractérisée en ce qu'**elle comprend un agent de réticulation chimique.

12. Article semi-fini en caoutchouc pour pneumatique, **caractérisé en ce qu'**il comprend une composition de caoutchouc, réticulable ou réticulée, telle que définie dans l'une quelconque des revendications 9 à 11.

13. Pneumatique **caractérisé en ce qu'**il comporte un article semi-fini tel que défini dans la revendication 12.

**Patentansprüche**

1. Dienblockelastomer, das der folgenden Formel entspricht:

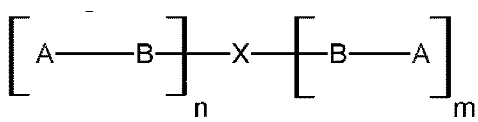

- wobei:

  - n und m für ganze Zahlen größer gleich 0 stehen und so beschaffen sind, dass n + m $\geq$ 1 und n + m $\leq$ 20,
  - jeder A-Block aus einem Polybutadien besteht,
  - jeder B-Block aus einem Dienelastomer, dessen molarer Anteil an Einheiten, die aus konjugierten Dienen hervorgehen, über 15% liegt, besteht, wobei die B-Blöcke miteinander identisch sind,
  - X für eine organische oder anorganische Gruppe, die eine mit einem verstärkenden Füllstoff wechselwirkende Funktion enthalten kann, steht,
  - das zahlenmittlere Molekulargewicht Mn1 jedes A-Blocks von 2500 bis 20.000 g/mol variiert,
  - das zahlenmittlere Molekulargewicht Mn2 jedes B-Blocks von 80.000 bis 350.000 g/mol variiert und
  - der Gehalt an 1,2-Verknüpfungen in jedem A-Block zwischen 1 und 20% liegt.

2. Dienblockelastomer nach Anspruch 1, **dadurch gekennzeichnet, dass** das Verhältnis der Molekulargewichte Mn1/Mn2 zwischen 5 und 20% liegt.

3. Dienblockelastomer nach Anspruch 1 oder 2, **dadurch gekennzeichnet, dass** m + n von 1 bis 4 variiert.

4. Dienblockelastomer nach einem der Ansprüche 1 bis 3, **dadurch gekennzeichnet, dass** der X-Block eine mit einem verstärkenden Füllstoff wechselwirkende Funktion umfasst.

5. Dienblockelastomer nach Anspruch 4, **dadurch gekennzeichnet, dass** die mit dem verstärkenden Füllstoff wechselwirkende Funktion eine Gruppe, die aus Silanol-, Amin-, Mono-, Di- oder Trialkoxysilan und Alkoxysilan mit einer

primären, sekundären oder tertiären Aminfunktion ausgewählt ist, umfasst.

6. Dienblockelastomer nach Anspruch 4, **dadurch gekennzeichnet, dass** die mit dem verstärkenden Füllstoff wechselwirkende Funktion eine C-Sn-Bindung umfasst.

7. Dienblockelastomer nach Anspruch 6, **dadurch gekennzeichnet, dass** die mit dem verstärkenden Füllstoff wechselwirkende Funktion durch Reaktion mit einem Agens vom Mono-, Di-, Tri- oder Tetrahalogenzinn-Typ erhalten wird.

8. Dienblockelastomer nach einem der vorhergehenden Ansprüche, **dadurch gekennzeichnet, dass** der B-Block bzw. die B-Blöcke aus Polyisopren, Copolymeren von Styrol und Butadien, Copolymeren von Styrol und Isopren, Copolymeren von Butadien und Isopren oder Styrol/Butadien/Isopren-Terpolymeren ausgewählt ist bzw. sind.

9. Vernetzbare oder vernetzte Kautschukzusammensetzung, die eine Elastomermatrix umfasst, **dadurch gekennzeichnet, dass** die Elastomermatrix ein Dienblockelastomer gemäß einem der vorhergehenden Ansprüche umfasst.

10. Zusammensetzung nach Anspruch 9, **dadurch gekennzeichnet, dass** sie einen verstärkenden Füllstoff umfasst.

11. Zusammensetzung nach Anspruch 9 oder 10, **dadurch gekennzeichnet, dass** sie ein chemisches Vernetzungsmittel umfasst.

12. Kautschuk-Halbzeug für Reifen, **dadurch gekennzeichnet, dass** es eine vernetzbare oder vernetzte Kautschukzusammensetzung gemäß einem der Ansprüche 9 bis 11 umfasst.

13. Reifen, **dadurch gekennzeichnet, dass** er ein Halbzeug gemäß Anspruch 12 umfasst.

## Claims

1. Block diene elastomer corresponding to the following formula:

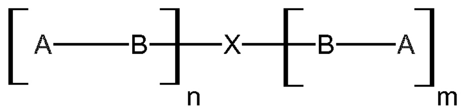

where:

- n and m are each an integer of greater than or equal to 0, such that n+m $\geq$ 1 and n+m $\leq$ 20,
- each A block is composed of a polybutadiene,
- each B block is composed of a diene elastomer, the molar content of units resulting from conjugated dienes of which is greater than 15%, the B blocks being identical to one another,
- X is an organic or inorganic group which can comprise a functional group which interacts with a reinforcing filler,
- the number-average molecular weight Mn1 of each A block varies from 2 500 to 20 000 g/mol,
- the number-average molecular weight Mn2 of each B block varies from 80 000 to 350 000 g/mol, and
- the content of 1,2- linkages in each A block is between 1 and 20%.

2. Block diene elastomer according to Claim 1, **characterized in that** the ratio of the said molecular weights Mn1/Mn2 is between 5 and 20%.

3. Block diene elastomer according to Claim 1 or 2, **characterized in that** m+n varies from 1 to 4.

4. Block diene elastomer according to any one of Claims 1 to 3, **characterized in that** the X block comprises a functional group which interacts with a reinforcing filler.

5. Block diene elastomer according to Claim 4, **characterized in that** the said functional group which interacts with the reinforcing filler comprises a group chosen from the following groups: silanol, amine, mono-, di- or trialkoxysilane, alkoxysilane bearing a primary, secondary or tertiary amine functional group.

6. Block diene elastomer according to Claim 4, **characterized in that** the said functional group which interacts with the reinforcing filler comprises a C-Sn bond.

7. Block diene elastomer according to Claim 6, **characterized in that** the said functional group which interacts with the reinforcing filler is obtained by reaction with an agent of mono-, di-, tri- or tetrahalotin type.

8. Block diene elastomer according to any one of the preceding claims, **characterized in that** the B block or blocks are chosen from polyisoprene, copolymers of styrene and butadiene, copolymers of styrene and isoprene, copolymers of butadiene and isoprene or styrene/butadiene/isoprene terpolymers.

9. Crosslinkable or crosslinked rubber composition comprising an elastomer matrix, **characterized in that** the elastomer matrix comprises a block diene elastomer as defined in any one of the preceding claims.

10. Composition according to Claim 9, **characterized in that** it comprises a reinforcing filler.

11. Composition according to Claim 9 or 10, **characterized in that** it comprises a chemical crosslinking agent.

12. Semi-finished article made of rubber for a tyre, **characterized in that** it comprises a crosslinkable or crosslinked rubber composition as defined in any one of Claims 9 to 11.

13. Tyre, **characterized in that** it comprises a semi-finished article as defined in Claim 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2526030
- US 4848511 A
- EP 0709235 A
- FR 2740778
- US 5066721 A
- FR 2930554
- EP 1278789 A
- WO 9736724 A
- WO 9916600 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 2009062733 A
- WO 0210269 A


### Littérature non-brevet citée dans la description


- **VILMIN, F. ; DUSSAP, C. ; COSTE, N.** *Applied Spectroscopy,* 2006, vol. 60, 619-29